# EUROPÄISCHE PATENTSCHRIFT

(11) **EP 3 179 285 B1**
(45) Veröffentlichungstag und Bekanntmachung des Hinweises auf die Patenterteilung: **19.08.2020**
(21) Anmeldenummer: 16201855.0
(22) Anmeldetag: 02.12.2016
(51) Int. Cl.: G02B 6/30

(54) **STECKBARE FASERKOPPELEINHEIT, FASERKOPPELSYSTEM UND VERFAHREN ZUR ANKOPPLUNG VON OPTISCHEN FASERN AN INTEGRIERTE OPTISCHE WELLENLEITER**
PLUG-IN FIBRE COUPLING UNIT, FIBRE COUPLING SYSTEM AND METHOD FOR COUPLING OPTICAL FIBRES TO INTEGRATED OPTICAL WAVEGUIDES
COUPLEUR DE FIBRE ENFICHABLE, SYSTÈME DE COUPLEUR DE FIBRE ET PROCÉDÉ DE COUPLAGE DE FIBRES OPTIQUES À DES GUIDES D'ONDE OPTIQUES INTÉGRÉS

(30) Priorität: 07.12.2015 DE 102015224397
(43) Veröffentlichungstag der Anmeldung: 14.06.2017
(73) Patentinhaber: Fraunhofer-Gesellschaft zur Förderung der angewandten Forschung e.V., 80686 München (DE)
(72) Erfinder: Brusberg, Lars, 14830 Corning, New York (US); Schröder, Henning, 12621 Berlin (DE)
(74) Vertreter: Gagel, Roland

(56) Entgegenhaltungen:
- WO-A1-2015/098854
- WO-A2-03/029852
- JP-A- 2014 164 270
- PITWON RICHARD CHARLES ALEXANDER ET AL: "Pluggable Electro-Optical Circuit Board Interconnect Based on Embedded Graded-Index Planar Glass Waveguides", JOURNAL OF LIGHTWAVE TECHNOLOGY, IEEE SERVICE CENTER, NEW YORK, NY, US, Bd. 33, Nr. 4, 15. Februar 2015 (2015-02-15), Seiten 741-754, XP011573637, ISSN: 0733-8724, DOI: 10.1109/JLT.2014.2361438 [gefunden am 2015-02-20]

## Beschreibung

### Technisches Anwendungsgebiet

Die vorliegende Erfindung betrifft eine Faserkoppeleinheit sowie ein Verfahren zur Ankopplung von optischen Fasern an optische Wellenleiter, die in einem Substrat integriert sind und sich bis an eine Stirnseite des Substrates erstrecken, sowie ein Faserkoppelsystem aus der Faserkoppeleinheit und dem Substrat mit den integrierten Wellenleitern.

Optische Glassubstrate mit planar integrierten Wellenleitern benötigen eine Vielzahl von optischen Schnittstellen zur Ein- und Auskopplung der optischen Signale. Die integrierten Wellenleiter müssen hierzu häufig mit optischen Fasern gekoppelt werden, über die der Transport der optischen Signale von und zu dem optischen Glassubstrat erfolgt. Die Ankopplung der optischen Fasern erfordert eine sehr genaue Justage der Fasern zu den integrierten Wellenleitern. Auf der anderen Seite sollte die Ankopplung aber auch mit möglichst geringem Aufwand kostengünstig realisiert werden können.

### Stand der Technik

Für die Ankopplung optischer Fasern an integrierte optische Wellenleiter in optischen Glas- oder Polymersubstraten, die bspw. Teil elektro-optischer Leiterplatten sein können, ist es bekannt, optische Buchsen an die Kante des Substrates bzw. der Leiter-platte zu montieren. Hierzu werden 3D-Strukturen in der Leiterplatte genutzt, die als mechanische Anschläge für die Montage der Buchsen dienen. Bei Polymerwellenleitern können Fräs- und Lithographieprozesse für die Erzeugung der Strukturen in der Leiterplatte genutzt werden. Auch Markierungen auf Leiterplatte und Buchse werden hierbei verwendet, um diese mittels visueller Justage zueinander auszurichten. Allerdings verhindern die hohen Toleranzen bei der Leiterplattenfertigung bisher eine industrielle Anwendung dieser Technik.

Eine weitere Möglichkeit der Ankopplung von optischen Fasern an integrierte optische Wellenleiter ist in der DE 692 19 843 T2 beschrieben. Hierbei wird eine Faserkoppeleinheit aus einem Siliziumsubstrat eingesetzt, in dem durch bekannte Ätztechniken der Siliziumtechnologie Grabenstrukturen für die Aufnahme von optischen Fasern erzeugt werden. Das Siliziumsubstrat weist eine Auflagefläche für die Auflage auf die Oberfläche des Substrates mit den integrierten Wellenleitern auf. Die Grabenstrukturen erstrecken sich bis zu dieser Auflagefläche, wobei die Endflächen der in die Grabenstrukturen eingelegten optischen Fasern eine Anschlagfläche für die Stirnseite des Substrates mit den integrierten Wellenleitern bilden. In der Auflagefläche des Siliziumsubstrates sind zwei Öffnungen mit einer definierten Geometrie ausgebildet, in die bei der Kopplung an das Substrat mit den integrierten Wellenleitern an der Oberfläche des Substrates ausgebildete Verbindungselemente eingreifen. Durch die Kombination aus Auflagefläche, Anschlagfläche und Eingriff der Verbindungselemente in die Öffnungen wird eine exakte Positionierung des Siliziumsubstrates zum Substrat mit den integrierten Wellenleitern in allen drei Raumrichtungen erreicht. Dadurch kann auf eine aufwändige aktive Justage der beiden Substrate verzichtet werden. Allerdings verursacht die Nutzung eines Siliziumsubstrates mit den mittels Siliziumtechnologie (wie zum Beispiel anisotropes, nasschemisches Ätzen oder Ionenstrahlätzen) sehr exakt einbringbaren Strukturen relativ hohe Kosten.

WO 03/029852 A2 zeigt ein Substrat, mit einer in einer Grabenstruktur fixierten optischen Faser, das mit der Faser nach unten derart auf einem größeren Substrat angeordnet wird, dass die optische Faser an einen Wellenleiter optisch ankoppeln kann, der auf der Oberfläche des größeren Substrats angeordnet ist.

Aus der Veröffentlichung "Pluggable Electro-Optical Circuit Board Interconnect Based on Embedded Graded-Index Planar Glass Waveguides", Journal of Lightwave Technology, IEEE Service Center, New York, NY, US, Bd. 33, Nr. 4, Seiten 741 - 754, sind in einem Glassubstrat integrierte Wellenleiter bekannt.

Aus WO 2015/098854 A1 ist ein Verfahren zur Fixierung einer optischen Faser auf einem Installationssubstrat mit einer optischen Komponente bekannt. Das Installationssubstrat weist zwei Bereiche auf, die durch einen Graben voneinander getrennt sind. In einem Bereich sind die optische Komponente sowie ein integrierter Wellenleiter angeordnet, der sich bis zum Graben erstreckt. Im anderen Bereich ist eine sich senkrecht zum Graben erstreckende Nut zur Aufnahme einer optischen Faser vorgesehen, die mit einem Faserfixierungssubstrat auf dem Installationssubstrat fixiert wird. Aus der JP 2014 164270 A ist die Kopplung eines optischen integrierten Wellenleiters mit optischen Fasern an der Stirnfläche des Substrats des optischen integrierten Wellenleiters bekannt. Die optischen Fasern sind in eine Ferrule integriert, die auf das Substrat überlappt und in der die Signale der optischen Fasern mit Linsen fokussiert werden.

Die Aufgabe der vorliegenden Erfindung besteht darin, ein Verfahren und eine Faserkoppeleinheit zur Ankopplung von optischen Fasern an in einem Substrat integrierte optische Wellenleiter anzugeben, die nur einen geringen Justageaufwand bei der Ankopplung erfordern und so sich durch den Verzicht auf Siliziumtechnologie (einkristalline Substrate, Reinraumtechnik) kostengünstig realisieren lassen.

### Darstellung der Erfindung

Die Aufgabe wird mit der Faserkoppeleinheit, dem Verfahren und dem Faserkoppelsystem gemäß den Patentansprüchen 1, 6 und 8 gelöst. Vorteilhafte Ausgestaltungen der Faserkoppeleinheit, des Verfahrens sowie des Faserkoppelsystems sind Gegenstand der abhängigen Patentansprüche oder lassen sich der nachfolgenden Beschreibung sowie den Ausführungsbeispielen entnehmen.

Die vorgeschlagene Faserkoppeleinheit ist aus einem Substrat gebildet, in der vorliegenden Patentanmeldung als Koppelsubstrat bezeichnet, das aus einem Glas- oder Polymermaterial besteht. Das Koppelsubstrat weist eine Auflagefläche für die Auflage auf eine Oberfläche des Substrates mit den integrierten Wellenleitern sowie Grabenstrukturen für die Aufnahme von optischen Fasern auf. Diese Grabenstrukturen erstrecken sich - in Draufsicht auf die Auflagefläche - wenigstens bis an die Auflagefläche. Die Endflächen von in die Grabenstrukturen eingelegten optischen Fasern und/oder eine erhabene Struktur des Koppelsubstrates am Rand der Auflagefläche bilden eine Koppel- oder Anschlagfläche und definieren in einer der möglichen Ausgestaltungen der Faserkoppeleinheit als Anschlag-fläche die Position für die Stirnseite des Substrates mit den integrierten Wellenleitern an das Koppel-substrat. Die Fasern können mechanisch an die Wellen-leiter im Substrat stoßen oder auch einen Spalt frei lassen, der durch ein brechungsindexangepasstes Material ausgefüllt werden kann. In der Auflagefläche des Koppelsubstrates ist wenigstens eine durchgängige Öffnung ausgebildet, die eine im Querschnitt passgenaue Aufnahme oder eine passgenaue Führung eines mechani-schen Verbindungselementes entlang einer Achse parallel zur Auflagefläche und senkrecht zur Koppel- oder Anschlagfläche ermöglicht. In einer nicht-erfindungsgemäßen alternativen Ausgestaltung weist die Auflagefläche des Koppelsubstrates wenigstens ein aus der Auflagefläche hervorstehendes Verbindungselement auf, das bei der Kopplung an das Substrat mit den integrierten Wellenleitern in eine entsprechende Öffnung an der Substratoberfläche eingreift.

Die Faserkoppeleinheit ermöglicht eine rein passive mechanische Justage bei der Ankopplung optischer Fasern an das Substrat mit den integrierten Wellenleitern. Die Koppeleinheit wird bei dem vorgeschlagenen Verfahren mit der Auflagefläche direkt auf die Oberfläche des Substrates aufgelegt, in dem die vorzugsweise planaren Wellenleiter integriert sind. Dadurch wird die passive mechanische Justage in der ersten Raumrichtung, im Folgenden auch als z-Richtung bezeichnet, realisiert. Die Justage in der zweiten Raumrichtung, im Folgenden als x-Richtung bezeichnet, wird in einer Variante durch den Anschlag der Anschlagfläche der Faserkoppeleinheit an die Stirnfläche des Substrates erreicht. Die Justage in der verbleibenden dritten Raumrichtung, im Folgenden als y-Richtung bezeichnet, wird durch die wenigstens eine Öffnung in der Auflagefläche in Verbindung mit einem in die Öffnung eingeführten mechanischen Verbindungselement, im Folgenden auch als Steckelement bezeichnet, und einer korrespondierenden Öffnung in der Oberfläche des Substrates mit den integrierten Wellenleitern erreicht. Diese Öffnungen in Verbindung mit dem Steckelement können in einer zweiten Variante anstelle der Anschlagfläche auch gleichzeitig zur Justage in x-Richtung dienen. In der nicht-erfindungsgemäßen alternativen Ausgestaltung ist das mechanische Verbindungs- bzw. Steckelement direkt, d. h. ohne entsprechende Öffnung, an der Auflagefläche des Koppelsubstrates ausgebildet und mit dieser verbunden. Auch eine Ausbildung des Steckelementes an der Ober-fläche des Substrates mit den integrierten Wellenleitern ist möglich. Mit dieser Faserkoppeleinheit wird somit eine rein passive mechanische Justage der darin eingelegten optischen Fasern, bspw. Glas- oder Polymerfasern, zu den im Substrat inte-grierten optischen Wellenleitern ermöglicht. Dieses Substrat kann bspw. ein Glassubstrat sein. Es kann dabei auch als elektro-optische Leiterplatte ausge-bildet oder Bestandteil einer derartigen Leiterplatte sein. Durch die rein passive mechanische Justage wird eine schnelle und preiswerte Montage bei der Ankopplung optischer Fasern an integrierte Wellenleiter ermög-licht. Die vorgeschlagene Faserkoppeleinheit lässt sich aufgrund der Nutzung von Glas- oder Polymermaterialien gegenüber der Nutzung eines Siliziumsubstrates sehr kostengünstig realisieren. Hierbei wurde erkannt, dass durch die verfügbaren Technologien für die Bearbeitung von Glas- und Polymermaterialien auch eine ausreichend hohe Genauigkeit für die Faserankopplung erreicht werden kann, ohne die Siliziumtechnologie für die präzise Fertigung von Strukturen einsetzen zu müssen.

Mit der vorgeschlagenen Faserkoppeleinheit lässt sich eine kostengünstige Konfektionierung eines Substrats mit integrierten Wellenleitern mit steckbaren optischen Standardfaser- oder Freistrahlschnittstellen realisieren. Wird erfindungsgemäß Glas als Material für das Koppelsubstrat verwendet, dann ist eine hohe mechanische Zuverlässigkeit einfach und kostengünstig durch eine entsprechende Dicke des Koppelsubstrates zu erreichen. Die Faserkoppeleinheit kann dabei sowohl lösbar, beispielsweise durch Klemmung, oder bei Bedarf auch unlösbar, beispielsweise durch Applikation von Klebstoff an wenigstens einer der Kontaktstellen oder durch Schweißen oder Löten, auf dem Substrat mit den optischen Wellenleitern fixiert werden.

Die Grabenstrukturen sind so in das Koppelsubstrat eingebracht, dass die optischen Achsen der eingelegten optischen Fasern bei Auflegen der Faserkoppeleinheit mit der Auflagefläche auf die Oberfläche des Substrates in der durch die Auflagefläche und die Steckverbindung, in einer Ausgestaltung auch zusätzlich durch die Anschlagfläche, vorgegebenen Koppelposition mit den optischen Achsen der Wellenleiter übereinstimmen. Hierzu müssen die Gräben für die optischen Fasern entsprechend angeordnet und dimensioniert sein.

In einer Ausgestaltung der vorgeschlagenen Faser-koppeleinheit sind die einen oder mehreren optischen Fasern permanent mit der Faserkoppeleinheit verbunden. An den aus der Faserkoppeleinheit herausragenden Enden dieser einen oder mehreren Fasern sind dann vorzugs-weise entsprechende Stecker, Buchsen oder andere Verbindungselemente zu optischen Fasern, insbesondere standardisierte Stecker oder Buchsen, vorgesehen.

In einer anderen Ausgestaltung sind die optischen Fasern kein Bestandteil der Faserkoppeleinheit. In dieser Ausgestaltung ist die Faserkoppeleinheit an einem der Auflagefläche gegenüberliegenden Ende des Substrates mit einer Faserankopplungsbuchse ausge-stattet, in die die optischen Fasern eingeführt und bis zur Auflagefläche des Koppelsubstrats in die Graben-strukturen eingeschoben und fixiert werden können.

In einer Ausgestaltung der vorgeschlagenen Faserkoppeleinheit ist wenigstens eine Öffnung in der Auflagefläche des Koppelsubstrates vorgesehen, in die ein steckbares Verbindungselement, bspw. in Form eines Passstiftes passgenau eingeführt werden kann. Das Substrat mit den integrierten Wellenleitern weist dann eine korrespondierende Öffnung auf, in die das Verbin-dungs- bzw. Steckelement beim Auflegen der Auflage-fläche auf das Substrat einführbar ist. Diese Öffnung im Substrat kann dabei ebenfalls im Querschnitt formschlüssig zum Verbindungselement ausgebildet sein. Sie kann auch eine längliche Form aufweisen, wobei dann die Längserstreckung senkrecht zur Koppel- oder Anschlagfläche verläuft und die Breite der Öffnung der Querschnittsbreite des Verbindungselementes entspricht. Auf diese Weise wird die exakte passive mechanische Justage in y-Richtung ermöglicht. Mit einer zum Verbindungs-element im Querschnitt formschlüssigen Ausbildung der Öffnung im Substrat wird zusätzlich auch die exakte passive mechanische Justage in x-Richtung ermöglicht. Die Öffnung im Substrat ist dabei vorzugs-weise durchgängig ausgestaltet oder zumindest so tief ausgelegt, dass das Verbindungselement beim Auflegen der Faserkoppeleinheit nicht bis zum Grund der Öffnung reicht. In gleicher Weise kann auch die Öffnung im Substrat zur passgenauen Einführung des Verbindungs- bzw. Steckelementes ausgebildet und in der Faserkoppeleinheit ein entsprechender Längsschlitz vorgesehen sein.

In einer nicht-erfindungsgemäßen weiteren Ausgestaltung ist das mechanische Verbindungs- bzw. Steckelement direkt an der Auflagefläche ausgebildet und mit dieser verbunden. Dies kann bspw. bei einem Koppelsubstrat aus einem Polymermaterial durch präzisen Spritzguss des Koppelsubstrates mit dem angebrachten Verbindungs- bzw. Steckelement erreicht werden.

Die Öffnungen im Substrat mit den integrierten Wellenleitern bzw. im Koppelsubstrat können bei Glas- oder Polymermaterialien mit Hilfe von Ätztechniken, Laserbearbeitung oder Mikrofräsen erzeugt werden. Die Öffnungen werden dabei vorzugsweise mit zur Oberfläche des Substrates bzw. zur Auflagefläche des Koppel-substrates senkrechten Seitenwänden erzeugt. Sie können einen beliebigen Querschnitt parallel zur Auflagefläche aufweisen, bspw. einen kreisrunden oder quadratischen oder auch einen länglichen Querschnitt, der bei pass-genauer Einführung dann dem Querschnitt des Verbin-dungselementes entsprechen muss.

Mit der vorgeschlagenen Faserkoppeleinheit lassen sich optische Fasern mit geringem Aufwand kostengünstig an integrierte Wellenleiter in optischen Substraten, bspw. in elektro-optischen Leiterplatten für Daten-center und Hochleistungsrechner oder in Modulen auf Basis von optischen Glassubstraten für die Signal-übertragung oder Sensorik, ankoppeln.

### Kurze Beschreibung der Zeichnungen

Das vorgeschlagene Verfahren mit der zugehörigen Faserkoppeleinheit wird nachfolgend anhand von Ausführungsbeispielen in Verbindung mit den Zeichnungen nochmals beispielhaft erläutert. Hierbei zeigen:
- Fig. 1: eine schematische Darstellung eines optischen Glassubstrats mit integrierten optischen Wellenleitern und Öffnungen für die Verbindung mit der vorgeschlagenen Faserkoppeleinheit;
- Fig. 2: eine schematische Darstellung eines Beispiels einer Faserkoppeleinheit für die Ankopplung an das optische Glassubstrat der Figur 1;
- Fig. 3: eine schematische Darstellung der an das optische Glassubstrat der Figur 1 angekoppelten Faserkoppeleinheit der Figur 2; und
- Fig. 4: eine Querschnittsdarstellung, die ein Beispiel für die Verbindung der vorgeschlagenen Faserkoppeleinheit mit einem optischen Glassubstrat über ein mechanisches Steckelement zeigt.

### Wege zur Ausführung der Erfindung

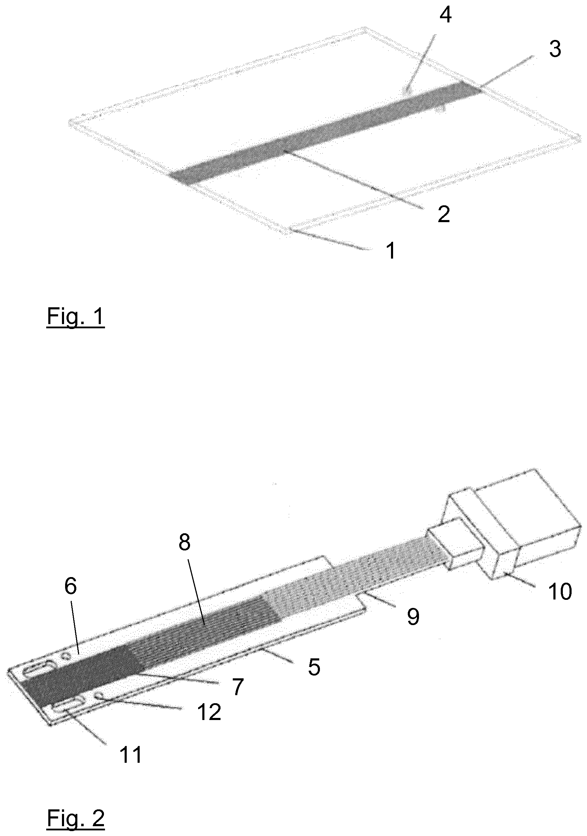

Im Folgenden werden das vorgeschlagenen Verfahren und die vorgeschlagene Faserkoppeleinheit bei der Ankopplung von optischen Fasern an ein optisches Glassubstrat beschrieben, in das optische Wellenleiter integriert sind. Ein Beispiel für ein derartiges optisches Glassubstrat ist in Figur 1 dargestellt. In der Figur ist das Glassubstrat 1 mit den an der Oberfläche integrierten planaren Wellenleitern 2 zu erkennen. Eine Einkopplung optischer Signale in die Wellenleiter 2 oder eine Auskopplung optischer Signale aus den Wellenleitern 2 kann über die Stirnfläche 3 an der Außenkante des Glassubstrates 1 erfolgen. An dieser Stelle sollen auch optische Glasfasern für die Weiterleitung oder Zuführung der optischen Signale ange-koppelt werden. Im vorliegenden Beispiel sind für die passive mechanische Justage der Faserkoppeleinheit zu dem Glassubstrat 1 zwei Passbohrungen 4 in das Glas-substrat 1 eingebracht, die sich durch das gesamte Glassubstrat erstrecken. Diese Passbohrungen 4 weisen einen Querschnitt auf, der dem Querschnitt von mechanischen Verbindungsstiften entspricht, die bei der späteren Justage der Faserkoppeleinheit zum Glas-substrat 1 in die Passbohrungen 4 eingeführt werden.

Die in diesem Beispiel eingesetzte Faserkoppel-einheit ist in Figur 2 dargestellt. Sie ist aus dem Koppelsubstrat 5 gebildet, das aus einem Glas- oder Polymermaterial besteht. Das Koppelsubstrat 5 weist auf einer Seite eine Auflagefläche 6 für die Auflage auf die Oberfläche des optischen Glassubstrates 1 auf. Mechanische Grabenstrukturen 7 für die Aufnahme optischer Fasern 8 erstrecken sich vom gegenüberliegenden Ende des Koppelsubstrates 5 bis wenigstens an die Auflagefläche 6 oder auch vollständig zum anderen Ende des Koppelsubstrates 5 wie im Beispiel der Figur 2. Die Grabenstrukturen 7 haben vorzugsweise einen V- oder U-förmigen Querschnitt. Sie sind so ausgebildet, dass eingelegte optische Fasern 8 einen Abstand zueinander aufweisen, der dem Abstand der integrierten Wellenleiter 2 im optischen Glassubstrat 1 entspricht. Weiterhin sind die Grabenstrukturen 7 so dimensioniert, dass die eingelegten optischen Fasern 8 mit ihrer optischen Achse einen Abstand zur Auflagefläche 6 aufweisen, die dem Abstand der optischen Achse der integrierten Wellenleiter 2 zur Oberfläche des Glassubstrates 1 entspricht.

Im vorliegenden Beispiel werden die optischen Fasern 8 bis zum Rand der Auflagefläche 6 in die Grabenstrukturen 7 eingelegt und dort fixiert. In der Figur 2 sind im mittleren Teil die entmantelten Fasern 8 zu erkennen, die sich bis an den Rand der Auflagefläche 6 erstrecken. Im hinteren Teil sind diese Fasern noch ummantelt und bilden ein flexibles Faserbändchen 9, das in einen MT-Faserstecker 10 mündet. Dieser Faserstecker ermöglicht die Ankopplung an andere Glasfasern oder eine andere optische bzw. optoelektronische Einheit. Im Beispiel der Figur 2 sind in dem Koppelsubstrat 5 im Bereich der Auflagefläche 6 sowohl Langlöcher 11 als auch Passbohrungen 12 für ein mechanisches Verbindungselement ausgebildet. Für die Justage werden dabei je nach Ausbildung des Glassubstrats mit den integrierten Wellenleitern entweder die Passbohrungen 12 oder die Langlöcher 11 genutzt. Das Koppelsubstrat 5 kann dabei auch nur die Langlöcher 11 oder nur die Passbohrungen 12 aufweisen.

Die Faserkoppeleinheit wird mit der Auflagefläche 6 auf die Oberfläche des optischen Glassubstrats 1 aufgelegt. Damit wird durch die Glasoberfläche bereits die z-Position der optischen Achse der optischen Fasern 8 zu den optischen Wellenleitern 2 festgelegt. Beim Anschlag der Stirnflächen der in die Grabenstrukturen 7 eingelegten optischen Fasern 8 an die Stirnfläche 3 der Außenkante des Glassubstrates 1 wird die x-Position der Faserkoppeleinheit zum optischen Glassubstrat 1 festgelegt. Dieser Anschlag ist jedoch nicht in jedem Falle erforderlich. Die x-Position kann bei Nutzung der Passbohrungen 12 auch durch diese Passbohrungen festge-legt werden. Die Passbohrungen 12 bzw. Langlöcher 11 in der Faserkoppeleinheit sind passgenau zu den Pass-bohrungen 4 im optischen Glassubstrat 1 angeordnet, so dass durch Einbringen eines Verbindungs- bzw. Steck-elementes in diese Bohrungen bzw. Löcher die y-Position der optischen Achsen der optischen Fasern 8 zu den optischen Wellenleitern festgelegt wird. Hierzu werden entweder vor dem Auflegen der Faserkoppeleinheit auf das Glassubstrat 1 die entsprechenden Verbindungselemente bzw. Verbindungsstifte in die Passbohrungen 4 des Glassubstrates 1 oder in die Passbohrungen 12 der Faserkoppeleinheit eingeführt und greifen dann beim Auflegen der Faserkoppeleinheit auf das Glassubstrat 1 in die korrespondierenden Bohrungen oder Langlöcher ein. In gleicher Weise könnten umgekehrt auch entsprechende Langlöcher im Glassubstrat 1 ausgebildet sein. Die Tiefe der Passbohrungen oder Langlöcher, in die die Verbindungselemente bzw. Verbindungsstifte beim Auflegen der Faserkoppeleinheit eingreifen, muss dabei jeweils so ausgeführt sein, dass die mechanischen Verbindungselemente oder Verbindungsstifte beim Verbinden von Faserkoppeleinheit und Glassubstrat nicht bis an den Grund dieser Bohrungen bzw. Löcher reichen. Vorzugsweise werden diese daher in dem entsprechenden Gegenstück, d. h. dem Glassubstrat oder der Faser-koppeleinheit, durchgängig ausgeführt.

Bei einer permanenten Verbindung einer oder mehrerer optischer Fasern 8 mit der Faserkoppeleinheit können die Einzelfasern oder ein entsprechendes Faserbändchen in einem Schritt mit den optischen Wellenleitern des optischen Glassubstrats verbunden werden und somit die optische Schnittstelle zum optischen Glassubstrat herstellen. Standardisierte Stecker an den Enden der Einzelfasern oder Faser-bändchen oder ein anders ausgeformtes und an der Faserkoppeleinheit angebrachtes Koppelelement ermöglichen damit eine standardisierte, optisch steckbare Schnittstelle zu dem optischen Glassubstrat, so dass eine einfache Montage in Komplettsysteme und auch die Charakterisierung an Messgeräten ermöglicht wird.

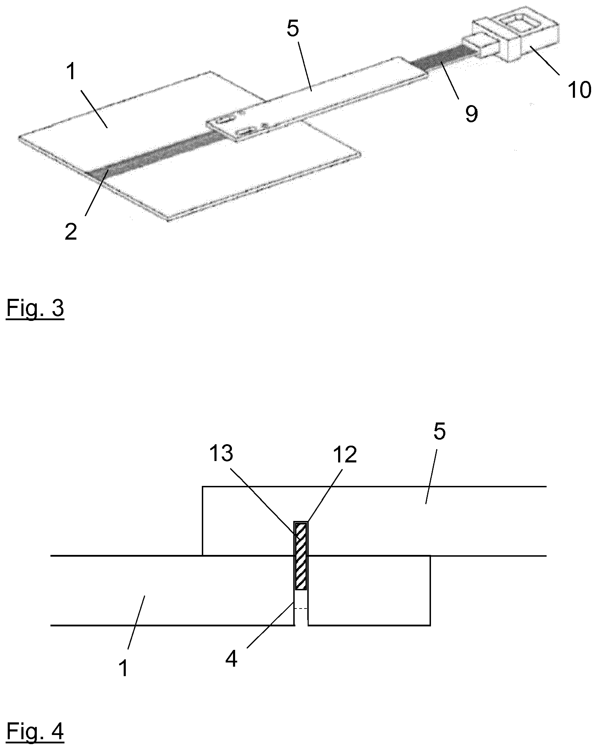

Figur 3 zeigt nochmals die entsprechend mit dem optischen Glassubstrat 1 verbundene Faserkoppeleinheit. Die mechanischen Verbindungselemente in den Pass-bohrungen sind dabei nicht zu erkennen. Hierzu zeigt Figur 4 eine beispielhafte Querschnittsdarstellung, in der ein in die Passbohrung 12 der Faserkoppeleinheit eingesteckter Passstift, beispielsweise aus Metall oder einem Kunststoffmaterial, als mechanisches Verbindungs-element 13 zu erkennen ist, der passgenau in korrespon-dierende Passbohrung 4 des Glassubstrates eingreift. Die Passbohrung 4 im Glassubstrat 1 ist hierzu entweder durchgängig ausgebildet oder weist eine ausreichende Tiefe auf, wie dies mit der gestrichelten Linie in Figur 4 angedeutet ist.

Nach der Fixierung der Faserkoppeleinheit am Glassubstrat 1 - oder im Zuge dessen - können etwaig verbleibende Spalte zwischen der Stirnfläche 3 des optischen Glassubstrates 1 und den Stirnflächen der Fasern 8 in der Faserkoppeleinheit mit brechungsindex-angepasstem Polymer vergossen werden, um Fresnelreflexionen zu reduzieren.

Neben den in diesem Beispiel dargestellten zylinderförmigen Verbindungselementen können auch beliebige andere Geometrien, bspw. auch quaderförmige Elemente oder Elemente mit anderen Geometrien verwendet werden. Die entsprechenden mechanischen Verbindungselemente können auch in dem jeweiligen Substrat bzw. Koppelsubstrat integriert sein, um die beiden Substrate zueinander in Position zu halten. Es kann auch beispielsweise Klebstoff verwendet werden, um diese permanent zu verbinden.

### Bezugszeichenliste

- 1: optisches Glassubstrat
- 2: integrierte optische Wellenleiter
- 3: Stirnfläche des optischen Glassubstrates
- 4: Passbohrungen im optischen Glassubstrat
- 5: Koppelsubstrat
- 6: Auflagefläche
- 7: Grabenstrukturen
- 8: optische Fasern
- 9: flexibles Faserbändchen
- 10: MTO-Stecker
- 11: Langlöcher im Koppelsubstrat
- 12: Passbohrungen im Koppelsubstrat
- 13: mechanisches Verbindungselement

## Patentansprüche

1. Faserkoppeleinheit, die zur Ankopplung optischer Fasern (8) an optische Wellenleiter (2) ausgebildet ist, die in einem Substrat (1) integriert sind und sich bis an eine Stirnseite (3) des Substrates (1) erstrecken, wobei die Faserkoppeleinheit
- ein Koppelsubstrat (5) aus einem Glas- oder Polymermaterial aufweist,
- das eine Auflagefläche (6) für die Auflage auf eine Oberfläche des Substrates (1) mit den integrierten Wellenleitern (2) und
- eine oder mehrere wenigstens bis zur Auflage-fläche (6) verlaufende Grabenstrukturen (7) für die Aufnahme einer oder mehrerer optischer Fasern (8) aufweist,
- wobei eine oder mehrere Endflächen einer oder mehrerer in die Grabenstruktur(en) (7) eingelegter optischer Fasern (8) eine Koppel- oder Anschlagfläche für die Stirnseite (3) des Substrates (1) mit den integrierten Wellenleitern (2) an das Koppelsubstrat (5) bilden und
- wenigstens eine durchgängig ausgebildete Öffnung (11, 12) in der Auflagefläche (6) ausgebildet ist, die eine im Querschnitt passgenaue Aufnahme oder eine passgenaue Führung eines mechanischen Verbindungselementes (13) entlang einer Achse parallel zur Auflagefläche (6) und senkrecht zur Koppel- oder Anschlagfläche ermöglicht.

2. Faserkoppeleinheit nach Anspruch 1,
**dadurch gekennzeichnet,**
**dass** die wenigstens eine durchgängig ausgebildete Öffnung (11, 12) zur Auflagefläche (6) senkrechte Seitenwandungen aufweist.

3. Faserkoppeleinheit nach Anspruch 1 oder 2, **dadurch gekennzeichnet,**
**dass** eine oder mehrere optische Fasern (8) in die Grabenstrukturen (7) eingelegt und in den Grabenstrukturen (7) fixiert sind

4. Faserkoppeleinheit nach Anspruch 3,
**dadurch gekennzeichnet,**
**dass** die eine oder die mehreren optischen Fasern (8) an einem aus der Faserkoppeleinheit herausragenden Ende mit einem Faserstecker (10) oder einer Faserbuchse verbunden sind.

5. Faserkoppeleinheit nach einem der Ansprüche 1 bis 4, **dadurch gekennzeichnet,**
**dass** das Koppelsubstrat wenigstens zwei der durchgängig ausgebildeten Öffnungen (11, 12) in der Auflagefläche (6) aufweist.

6. Verfahren zur Ankopplung optischer Fasern (8) an optische Wellenleiter (2), die in einem Substrat (1) integriert sind und sich bis an eine Stirnseite (3) des Substrates (1) erstrecken, bei dem
- eine Faserkoppeleinheit nach einem der Ansprüche 1 bis 5 verwendet und dimensioniert wird, dass optische Achsen von in die Grabenstrukturen (7) eingelegten optischen Fasern (8) bei Auflegen des Koppelsubstrates (5) mit der Auflagefläche (6) auf einen Oberflächenbereich des Substrates (1) in einer vorgegebenen Koppelposition mit optischen Achsen der integrierten Wellenleiter (2) übereinstimmen,
- in den Oberflächenbereich des Substrates (1) wenigstens eine Öffnung (4) eingebracht wird, die sich in der Koppelposition mit wenigstens einer der einen oder mehreren durchgängig ausgebildeten Öffnungen (11, 12) oder mechanischen Verbindungselemente (13) in der Auflagefläche (6) des Koppelsubstrates (5) überdeckt und so ausgelegt wird, dass über ein in die Öffnungen (4, 11, 12) eingeführtes mechanisches Verbindungs-element (13) die Koppelposition wenigstens in einer Achse parallel zur Auflagefläche (6) und zur Koppel- oder Anschlagfläche festgelegt wird, und
- die Faserkoppeleinheit mit der Auflagefläche (6) so auf den Oberflächenbereich des Substrates (1) aufgelegt wird, dass wenigstens ein in die Öffnung (4) im Substrat (1) oder in wenigstens eine der durchgängig ausgebildeten Öffnungen (11, 12) im Koppelsubstrat (5) eingestecktes mechanisches Verbindungselement (13) in die jeweils korrespondierende Öffnung (4, 11, 12) im Koppelsubstrat (5) oder Substrat (1) eingreift.

7. Verfahren nach Anspruch 6,
**dadurch gekennzeichnet,**
**dass** die wenigstens eine Öffnung (4) im Substrat (1) durchgängig ausgeführt wird.

8. Faserkoppelsystem mit einer Faserkoppeleinheit nach einem der Ansprüche 1 bis 5 und einem Substrat (1) mit integrierten optischen Wellenleitern (2), bei dem
- die eine oder mehreren Grabenstrukturen (7) im Koppelsubstrat (5) so ausgeführt sind, dass optische Achsen von in die Grabenstrukturen (7) eingelegten optischen Fasern (8) bei Auflegen des Koppelsubstrates (5) mit der Auflagefläche (6) auf einen Oberflächenbereich des Substrates (1) in einer vorgegebenen Koppelposition mit optischen Achsen der integrierten Wellenleiter (2) übereinstimmen, und
- das Substrat (1) wenigstens eine Öffnung (4) aufweist, die sich in der Koppelposition mit wenigstens einer der einen oder mehreren durchgängig ausgebildeten Öffnungen (11, 12) in der Auflagefläche (6) des Koppelsubstrates (5) überdeckt und so ausgelegt ist, dass über ein in die Öffnungen (4, 11, 12) eingeführtes mechanisches Verbindungselement (13) die Koppelposition wenigstens in einer Achse parallel zur Auflagefläche (6) und zur Koppel- oder Anschlagfläche festgelegt wird.

9. Faserkoppelsystem nach Anspruch 8,
**dadurch gekennzeichnet,**
**dass** das wenigstens eine mechanische Verbindungs-element (13) entweder in der wenigstens einen Öffnung (4) im Substrat (1) oder in wenigstens einer der einen oder mehreren durchgängig ausgebildeten Öffnungen (11, 12) in der Auflagefläche (6) des Koppelsubstrates (5) fixiert ist.

10. Faserkoppelsystem nach Anspruch 9,
**dadurch gekennzeichnet,**
**dass** das Substrat (1) und das Koppelsubstrat (5) lösbar oder unlösbar miteinander verbunden sind.

11. Faserkoppelsystem nach einem der Ansprüche 8 bis 10, **dadurch gekennzeichnet,**
**dass** die wenigstens eine Öffnung (4) im Substrat (1) durchgängig ausgeführt ist.

12. Faserkoppelsystem nach einem der Ansprüche 9 bis 11, **dadurch gekennzeichnet,**
**dass** das Koppelsubstrat wenigstens zwei der durchgängig ausgebildeten Öffnungen (11, 12) in der Auflagefläche (6) und das Substrat (1) mit den integrierten Wellenleitern (2) wenigstens zwei der sich in der Koppelposition mit den durchgängig ausgebildeten Öffnungen (11, 12) in der Auflagefläche (6) des Koppelsubstrates (5) überdeckenden Öffnungen (4) aufweist.

## Claims

1. A fiber coupling unit for coupling optical fibers (8) to optical waveguides (2) that are integrated into a substrate (1) and extend up to an end face (3) of the substrate (1), wherein the coupling unit features
- a coupling substrate (5) of a glass or polymer material with
- a contact surface (6) for contacting a surface of the substrate (1) with the integrated waveguides (2) and with
- one or several trench structures (7) that extend at least up to the contact surface (6) and serve for accommodating one or several optical fibers (8),
- wherein one or several end faces of one or several optical fibers (8) inserted into the trench structure (s) (7) form(s) a coupling or stopping face for the end face (3) of the substrate (1) with the integrated waveguides (2) on the coupling substrate (5) and
- at least one continuously realized opening (11, 12) is formed in the contact surface (6) in order to accommodate a mechanical connecting element (13) in a cross-sectionally form-fitting fashion or in order to guide a mechanical connecting element (13) along an axis extending parallel to the contact surface (6) and perpendicular to the coupling or stopping face in a cross-sectionally form-fitting fashion.

2. The fiber coupling unit according to claim 1,
**characterized in**
**that** the sidewalls of the at least one continuously realized opening (11, 12) extend perpendicular to the contact surface (6).

3. The fiber coupling unit according to claim 1 or 2,
**characterized in**
**that** one or several optical fibers (8) are inserted into the trench structures (7) and fixed in the trench structures (7).

4. The fiber coupling unit according to claim 3,
**characterized in**
**that** the one or several optical fibers (8) are connected to a fiber connector (10) or a fiber socket on an end protruding from the fiber coupling unit.

5. The fiber coupling unit according to one of claims 1 to 4,
**characterized in**
**that** the coupling substrate features at least two of said continuously realized openings (11, 12) in the contact surface (6).

6. A method for coupling optical fibers (8) to optical waveguides (2) that are integrated into a substrate (1) and extend up to an end face (3) of the substrate (1), wherein
- a fiber coupling unit according to one of claims 1 to 5 is used and dimensioned that optical axes of optical fibers (8) inserted into the trench structures (7) correspond to optical axes of the integrated waveguides (2) when the contact surface (6) of the coupling substrate (5) is placed on a surface area of the substrate (1) in a predefined coupling position, wherein
- at least one opening (4) is produced in the surface area of the substrate (1) and in the coupling position coincides with at least one of the one or several continuously realized openings (11, 12) in or mechanical connecting elements (13) on the contact surface (6) of the coupling substrate (5), with this at least one opening in the surface area of the substrate being designed such that the coupling position is defined at least along an axis extending parallel to the contact surface (6) and to the coupling or stopping face by means of a mechanical connecting element (13) inserted into the openings (4, 11, 12), and wherein
- the fiber coupling unit is placed on the surface area of the substrate (1) with its contact surface (6) such that at least one mechanical connecting element (13) inserted into the opening (4) in the substrate (1) or into at least one of the continuously realized openings (11, 12) in the coupling substrate (5) engages into the respectively corresponding opening (4, 11, 12) in the coupling substrate (5) or the substrate (1).

7. The method according to claim 8,
**characterized in**
**that** the at least one opening (4) in the substrate (1) is realized continuously.

8. A fiber coupling system with a fiber coupling unit according to one of claims 1 to 5 and a substrate (1) with integrated optical waveguides (2), wherein
- the one or several trench structures (7) in the coupling substrate (5) are realized such that optical axes of optical fibers (8) inserted into the trench structures (7) correspond to optical axes of the integrated waveguides (2) when the contact surface (6) of the coupling substrate (5) is placed on a surface area of the substrate (1) in a predefined coupling position, and wherein
- the substrate (1) features at least one opening (4) that in the coupling position coincides with at least one of the one or several continuously realized openings (11, 12) in the contact surface (6) of the coupling substrate (5), with this at least one opening in the substrate being designed such that the coupling position is defined at least along an axis extending parallel to the contact surface (6) and to the coupling or stopping face by means of a mechanical connecting element (13) inserted into the openings (4, 11, 12) .

9. The fiber coupling system according to claim 8,
**characterized in**
**that** the at least one mechanical connecting element (13) is either fixed in the at least one opening (4) in the substrate (1) or in at least one of the one or several continuously realized openings (11, 12) in the contact surface (6) of the coupling substrate (5).

10. The fiber coupling system according to claim 9,
**characterized in**
**that** the substrate (1) and the coupling substrate (5) are separably or inseparably connected to one another.

11. The fiber coupling system according to one of claims 8 to 10,
**characterized in**
**that** the at least one opening (4) in the substrate (1) is realized continuously.

12. The fiber coupling system according to one of claims 9 to 11,
**characterized in**
**that** the coupling substrate features at least two of the continuously realized openings (11, 12) in the contact surface (6) and the substrate (1) with the integrated waveguides (2) features at least two of the openings (4) that coincide with the continuously realized openings (11, 12) in the contact surface (6) of the coupling substrate (5).

## Revendications

1. Unité de couplage de fibres, qui est conçue pour coupler des fibres optiques (8) à des guides d'ondes optiques (2), qui sont intégrés dans un substrat (1) et s'étendent jusqu'à une face d'extrémité (3) du substrat (1), dans lequel l'unité de couplage de fibres :
- présente un substrat de couplage (5) en verre ou en un matériau polymère,
- présente une surface d'appui (6) pour le support sur une surface du substrat (1) avec les guides d'ondes intégrés (2) et
- une ou plusieurs structures de tranchée (7) s'étendant au moins jusqu'à la surface d'appui (6) pour recevoir une ou plusieurs fibres optiques (8),
- dans lequel une ou plusieurs faces d'extrémité d'une ou plusieurs fibres optiques (8) insérées dans la ou les structures de tranchée (7) forment une surface de couplage ou d'arrêt pour la face avant (3) du substrat (1) avec les guides d'ondes intégrés (2) sur le substrat de couplage (5) et
- au moins une ouverture formée en continu (11, 12) dans la surface d'appui (6) est réalisée, qui permet une réception parfaitement ajustée dans la section transversale ou un guidage parfaitement ajusté d'un élément de raccordement mécanique (13) le long d'un axe parallèle à la surface d'appui (6) et perpendiculaire à la surface de couplage ou d'arrêt.

2. Unité de couplage de fibres selon la revendication 1,
**caractérisée** en
qu'au moins une ouverture à configuration continue (11, 12) a des parois latérales perpendiculaires à la surface d'appui (6).

3. Unité de couplage de fibres selon la revendication 1 ou 2,
**caractérisée en ce**
**qu'**une ou plusieurs fibres optiques (8) sont insérées dans les structures de tranchée (7) et sont fixées dans les structures de tranchée (7).

4. Unité de couplage de fibres selon la revendication 3,
**caractérisée en ce**
**que** la ou les fibres optiques (8) sont connectées à une extrémité faisant saillie de l'unité de couplage de fibres avec une fiche de fibre (10) ou une douille de fibre.

5. Unité de couplage de fibres selon une des revendications 1 à 4,
**caractérisée en ce**
**que** le substrat de couplage présente au moins deux des ouvertures à configuration continue (11, 12) dans la surface d'appui (6).

6. Procédé de couplage de fibres optiques (8) à des guides d'ondes optiques (2), qui sont intégrés dans un substrat(1) et s'étendent jusqu'à une face d'extrémité (3) du substrat (1), dans lequel
- une unité de couplage de fibres selon un des revendications 1 à 5 est utilisée et dimensionnée, de telle sorte que les axes optiques des fibres optiques (8) insérées dans les structures de tranchée (7) lorsque le substrat de couplage (5) est placé avec la surface d'appui (6) sur une surface du substrat (1) en une position de couplage prédéterminée coïncident avec des axes optiques du guide d'onde intégré (2),
- dans la surface du substrat (1) au moins une ouverture (4) est ménagée, qui en position de couplage avec au moins une des une ou plusieurs ouvertures continues (11, 12) ou des éléments de raccordement mécaniques (13) dans la surface d'appui (6) du substrat de couplage (5) est recouverte et conçue de telle sorte que via l'élément de liaison mécanique (13) introduit dans les ouvertures (4, 11, 12) la position de couplage au moins dans un axe parallèle à la surface d'appui (6) et à la surface de couplage ou d'arrêt est déterminée et
- l'unité de couplage de fibres avec la surface d'appui (6) est placée sur la surface du substrat (1) de telle sorte qu'au moins un élément de raccordement mécanique (13) enfiché dans l'ouverture (4) du substrat (1) ou dans au moins une des ouvertures à configuration continue (11, 12) dans le substrat de couplage (5) vienne en prise avec l'ouverture correspondante (4, 11, 12) dans le substrat de couplage (5) ou le substrat (1) .

7. Procédé selon la revendication 6,
**caractérisé en ce**
**qu'**au moins une ouverture (4) dans le substrat (1) est configurée de manière continue.

8. Système de couplage de fibres avec une unité de couplage de fibres selon une des revendications 1 à 5 et un substrat (1) avec des guides d'ondes optiques intégrés (2), dans lequel
- la ou les structures de tranchée (7) dans le substrat de couplage (5) sont conçues de telle sorte que des axes optiques des fibres optiques (8) insérées dans les structures de tranchée (7) lorsque le substrat de couplage (5) est placé avec la surface d'appui (6) sur une surface du substrat (1) dans une position de couplage prédéterminée coïncident avec les axes optiques du guide d'onde intégré (2), et
- le substrat (1) présente au moins une ouverture (4), qui recouvre dans la position de couplage au moins une des une ou plusieurs ouvertures à configuration continue (11, 12) dans la surface d'appui (6) du substrat de couplage (5) et est conçue de telle sorte que via un élément de raccordement mécanique (13) introduit dans les ouvertures (4, 11, 12) la position d'accouplement soit définie au moins dans un axe parallèle à la surface d'appui (6) et à la surface d'accouplement ou d'arrêt.

9. Système de couplage de fibres selon la revendication 8,
**caractérisé en ce**
**qu'**au moins un élément de liaison mécanique (13) est fixé soit dans au moins une ouverture (4) dans le substrat (1), soit dans au moins une des une ou plusieurs ouvertures (11, 12) à configuration continue dans la surface d'appui (6) du substrat de couplage (5) .

10. Système de couplage de fibres selon la revendication 9,
**caractérisé en ce**
**que** le substrat (1) et le substrat de couplage (5) sont raccordés de manière amovible ou non amovible l'un à l'autre.

11. Système de couplage de fibres selon une des revendications 8 à 10,
**caractérisé en ce**
**qu'**au moins une ouverture (4) dans le substrat (1) est continue.

12. Système de couplage de fibres selon une des revendications 9 à 11,
**caractérisé en ce**
**que** le substrat de couplage présente au moins deux des ouvertures à configuration continue (11, 12) dans la surface d'appui (6) et le substrat (1) présente avec les guides d'ondes intégrés (2) au moins deux des ouvertures (4) recouvrant le substrat de couplage (5) dans la position de couplage avec les ouvertures à configuration continue (11, 12) dans la surface d'appui (6).
